Europäisches Patentamt

European Patent Office

Office européen des brevets

(19)

(11) **EP 1 355 245 A1**

(12) **EUROPEAN PATENT APPLICATION**

(43) Date of publication:
**22.10.2003 Bulletin 2003/43**

(51) Int Cl.⁷: **G06F 17/60**

(21) Application number: **02405301.9**

(22) Date of filing: **15.04.2002**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **ABB RESEARCH LTD.
8050 Zürich (CH)**

(72) Inventors:
• **Poncet, Andreas
8049 Zürich (CH)**

• **Korendo, Zbigniew
31-216 Krakow (PL)**
• **Orkisz, Michal
30-076 Krakow (PL)**

(74) Representative: **ABB Patent Attorneys
c/o ABB Schweiz AG,
Intellectual Property (CH-LC/IP),
Brown Boveri Strasse 6
5400 Baden (CH)**

(54) **Method for simulating project duration and costs**

(57) The inventive method for simulating project costs and duration of a project with a set of interdependent tasks comprises the steps of:

- determining task duration probability distributions;

- performing different realizations of possible scenarios with different task durations, determining both total project duration and aggregated liquidation damages of penalties defined by task duration penalty functions; and

- consolidating and displaying the results of all realizations.

The method can be used in a project-planning phase as well as in a project-tracking phase with dynamically updated actual task durations.

Fig.1

EP 1 355 245 A1

**Description**

Background of the Invention

The invention relates to the field of project management. It relates to a method for simulating duration and costs of a project in a data processing system and to a computer program for executing this method.

Background Art

One major challenge of project management consists in the prediction of the actual cost that will finally be necessary for the realization of a certain project.
There are essentially two sources of difficulty:

1. the successful completion of each project task depends on complex uncertain factors such as product quality, technical hurdles, qualitative and quantitative fluctuation of human resources, occurrence of external events, etc., and

2. project tasks are dynamically coupled with each other; i.e., one task can influence other tasks' costs indirectly, e.g., through delay.

Assessing the overall temporal and financial risk, which results from the complex multi-dependencies, is a crucial step: it allows the search of relevant preventive actions or risk mitigation measures.
The challenge mentioned above motivates a decision support tool in the form of a computer-based simulator of project evolution. Simulation enables the assessment of a "candidate" decision by representation of several potential scenarios and calculation of the corresponding consequences.
Project management software, such as Microsoft's Corporations MS Project, typically allow a fine representation of the project execution phase by decomposition into tasks or sub-tasks. These tasks are connected according to their sequential interdependency. An estimated fixed duration is assigned to each task.
Recently, several commercial solutions for project schedule risk simulation have been introduced:

- Monte Carlo simulator, *Primavera Systems Inc., Bala Cynwyd-PA, USA,* is an extension of its P3 software product which allows schedule risk and critical path analysis,

- Crystal Ball 2000, *Decisioneering Inc., Denver-CO, USA,* is an add-in of Microsoft's Excel for risk analysis, though without special support for project schedule,

- @RISK For Project, *Palisade Corp., Newfield-NY, USA,* is an add-in of MS Project for Monte Carlo simulation of project duration and correlation analysis, and

- *Vité Corp., Mountain View-CA, USA,* has announced the combination of its SimVision project design and simulation software with MS Project.

US 6,088,678 describes a computer-implemented process simulation method or tool that uses a software engine which calculates resources required to complete a project. Basis of calculation consists of user-defined benefit-trade matrices associated with substeps of the project and design requirement priority values as well as a sample design whose process is to be simulated. Design requirement priority values and the sample design are input. Each substep is defined using a benefit-trade matrix that comprises a multiple variable lookup table that embodies history data relating to the substep. Each matrix includes relative weights of schedule, cost and risk elements for the substep and user-input rating values corresponding to the importance of each element. A logical equation is defined for each substep that computes the time required to complete the project, required resources for the project, and cost of the project based upon data input thereto. Weights for schedule, cost and risk elements of each benefit-trade matrix, and rating values for schedule, cost and risk elements of each benefit-trade matrix are input by a user. Output vectors for each benefit-trade matrix that comprise values corresponding to the respective weight of each element times the respective rating value of each element are computed. At each substep, resources required to complete the project are calculated using the vector derived from the benefit-trade matrix associated with the substep, and the design requirement priority values and predefined elements or vector derived from the benefit-trade matrix associated with a previous substep.
US 5,303,170 describes a system and a method for process modeling and project planning which allows a user to suggest, for each task, several possible resources, e.g. novice or veteran teams, and the corresponding task duration. The project model is deterministic.

Summary of the Invention

It is an object of the present invention to provide a method for simulating duration and costs of a project in a data processing system.

It is a further object of the present invention to provide a computer program loadable into an internal memory of a digital computer, comprising computer program code means to make, when said program is loaded in the computer, the computer execute the inventive method.

This object is achieved by the inventive method to simulate project duration and cost according to Claim 1.

The inventive method comprises the steps of:

- determining each task's duration probability distribution,

- performing a number of different realizations of possible scenarios with different task durations according to said probability distribution, for each of said realizations, determining

  - total project duration depending on project task interdependencies and task duration and/ or completion time,

  - a task bonus or penalty defined by an associated task penalty function depending on task interdependencies and task duration and/ or completion time for each of said project tasks, and

  - total liquidation damages by aggregating said bonuses or penalties for said project tasks; and,

- consolidating and displaying the results of all realizations.

The task penalty functions are preferrably expressed as linear functions or as piecewise linear functions.

In order to process said interdependencies in a data processing system they are preferrably expressed as mathematical functions, specifying how start and/ or completion times of successor tasks can be computed based on start and/ or completion time of predecessor tasks.

The results are preferrably displayed in the form of two histograms, one showing project duration probability distribution, the other one showing total project liquidation damages.

For further facilitating interpretation of said results, risk profiles are determined, thereby showing cumulated probability of project duration and total liquidation damages.

The method can be used in a project-planning phase as well as in a project-tracking phase. In the second case, the past tasks are no longer uncertain and are set to their actual realized value, thereby dynamically updating the risk profiles based on the latest project development.

The inventive computer program is preferably recorded on a computer readable medium, and executes, when run on the computer, the method according to the invention.

Brief Description of the Drawings

The present invention will be explained in detail hereafter by reference to the drawings, wherein:

Fig. 1 shows the structure of a project cost and duration simulation engine,

Figs. 2 and 3 show exemplary penalty/ bonus functions,

Fig. 4 shows an exemplary task dependence structure, and

Figs. 5 and 6 show smoothed histograms with cumulated risk profiles.

Description of the Preferred Embodiments

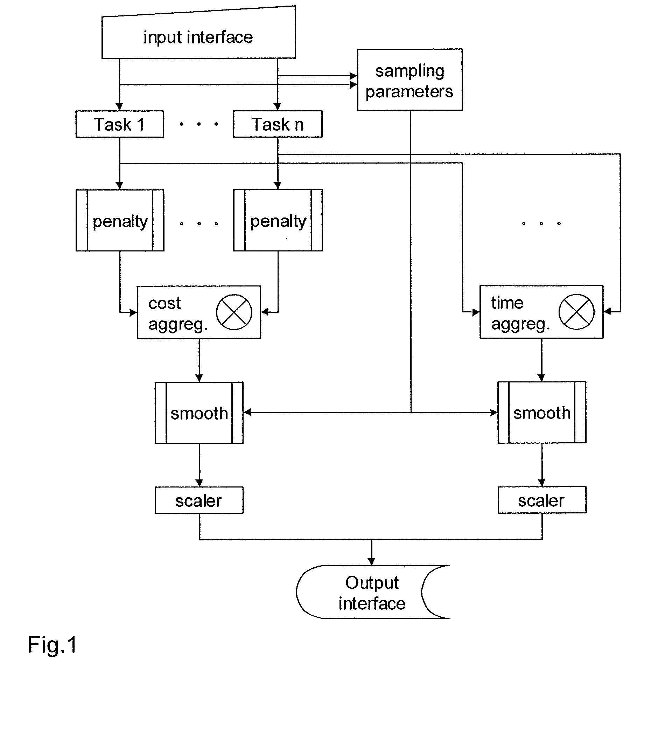

Fig. 1 shows the structure of the inventive system, a project duration and cost simulation engine. The system is used to describe a project as a set of interdependent tasks whose durations are uncertain within some assumed limits, and whose completion before or after a specified deadline may carry a prescribed task bonus or penalty.

The duration and cost simulation engine performs the following actions:

1. Fitting of duration distributions to given mode, lower and upper quantiles (or defaults)

For statistical modeling, all probability density functions used are expressed in terms of five parameters:

lower and upper percentiles $\alpha_1$ and $\alpha_u$,

lower and upper quantiles $x_1$ and $x_u$, and

the mode $x_{MP}$.

Often the number of parameters is reduced by fixing the lower and upper percentiles (e.g., to 0.05 and 0.95 respectively). The latter parameters must fulfill the condition

$$0 < \alpha_1 < \frac{1}{2} < \alpha_u < 1.$$

The three remaining parameters are called "optimistic" (e.g., 5%-quantile $x_1$), "realistic" (mode $x_{MP}$), and "pessimistic" values (e.g., 95%-quantile $x_u$).
They must fulfill

$$x_1 < x_{MP} < x_u.$$

The uncertain variable of interest $x$ represents duration or cost, hence small values are associated with "good" and large values with "bad".
Any given probability distribution is in general described by a different set of specific parameters. They allow to compute the distribution easily though are difficult to specify by the user. Therefore these specific parameters must be fitted (either analytically or numerically) so that the resulting probability density function is consistent with the specified parameters.
As an example, consider the Weibull distribution, which can be given an asymmetric shape. The standard distribution is defined by

$$p_0(x \mid a,b) = \frac{b}{a^b} x^{b-1} \exp\left[-\left(\frac{x}{a}\right)^b\right] \qquad x \geq 0,$$

which is characterized by two parameters $a$ and b. In order to let the uncertain variable take arbitrary lower bound (not necessarily zero), we include a third parameter $c$ (for location):

$$p(x \mid a,b,c) = \frac{b}{a^b}(x-c)^{b-1} \exp\left[-\left(\frac{x-c}{a}\right)^b\right] \qquad x \geq c.$$

The three user parameters (optimistic, realistic, and pessimistic) $x_1, x_{MP}, x_u$ - besides the lower and upper percentiles $\alpha_1, \alpha_u$ - constrain the distribution parameters as follows:

$$\begin{cases} \int_{-\infty}^{x_l} p(x \mid a,b,c)dx = \alpha_l \\ \int_{-\infty}^{x_u} p(x \mid a,b,c)dx = \alpha_u \\ dp(x_{MP} \mid a,b,c)/dx = 0 \end{cases}$$

Solving now this system of three implicit equations leads to

$$a = \frac{x_u - x_{MP}}{\gamma_u^d - (1-d)^d}$$

$$b = \frac{1}{d}$$

$$c = x_{MP} - a(1-d)^d,$$

where $d$ is the root of

$$(1-\rho)(1-d)^d + \rho\gamma_u^d - \gamma_1^d = 0$$

subject to

$$\max\{1-\gamma_u, 0\} < d < 1-\gamma_1$$

and $\rho, \gamma_1, \gamma_u$ are constants with

$$\rho = \frac{x_1 - x_{MP}}{x_u - x_{MP}}$$

$$\gamma_1 = -\log(1-\alpha_1)$$

$$\gamma_u = -\log(1-\alpha_u).$$

2. Representation of task duration costs by penalty/ bonus functions, i.e., (nonlinear) functions of task durations or completion dates

Each project task can have an associated penalty/ bonus function. This function specifies penalty or bonus for completing a task before or after a specific deadline or depending on the task's duration.

Two examples will illustrate sample penalty/ bonus functions.

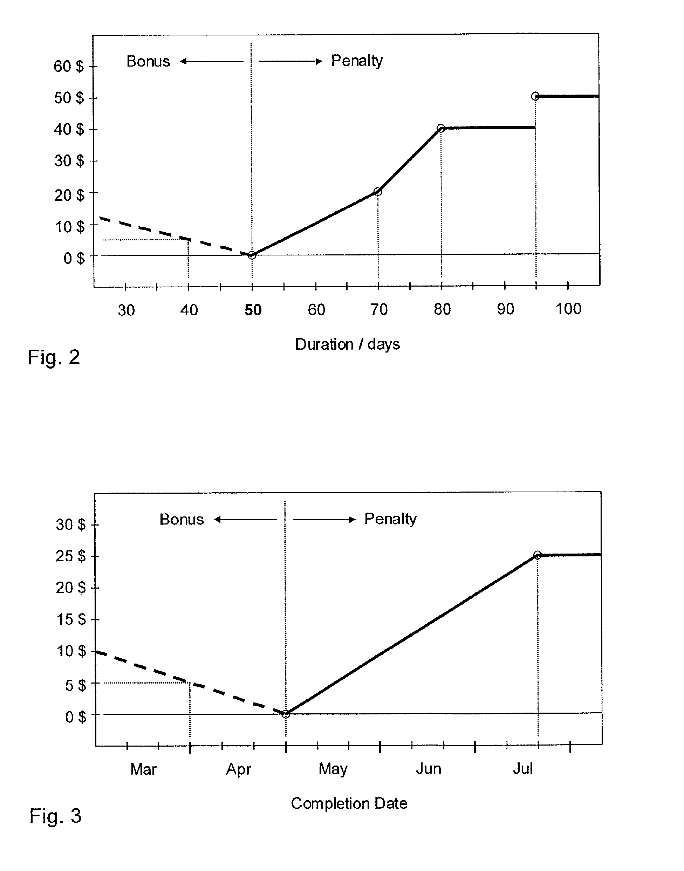

In the example of Fig. 2 the horizontal axis represents the task duration (in days), while the vertical axis represents the cost (in USD). Depending on the duration of the task either a bonus is awarded or penalty is imposed. Completing the task 50 days after project start carries no bonus or penalty. For early finish there is a bonus specified by the bonus slope (0.5 USD/day), e.g. 5 $ for a duration of 40 days. The bonus rises the sooner the task is completed. A duration of more than 50 days results in a penalty. The penalty rises depending on the delay. In the shown example the penalty rises with two different gradients. A first gradient of 1 $/ day for a duration up to 70 days and a second gradient of 2 $/day for a duration up to 80 days. In the shown example a constant penalty of 40 $ is defined for a duration of 80 to 100 days. For a duration of more than 95 days a maximum penalty (cap) of 50 $ is imposed.

In the example of Fig. 3 the horizontal axis represents the task completion date, while the vertical axis represents the cost (in USD). Depending on the completion date of the task either a bonus is awarded or penalty is imposed. This is particularly interesting in the case of multiple task dependencies, i.e. the start of a second task being dependent on the completion of a first task. Completion of the task prior to April 30 results in a bonus, e.g. 5 $ for a completion by March 31. The bonus rises the sooner the task is completed. A completion after April 30 results in a penalty. The penalty rises the later the task is completed. In the shown example the penalty rises linear up to a maximum penalty of 25 $ for task completion after July 20.

Such penalty/ bonus functions are expressed as piecewise linear functions (sets of corner points marked as circles). When a task's duration is computed, its penalty/ bonus (if specified) is evaluated by interpolating between the corner points. The penalties/ bonuses of individual tasks are combined to form the overall project's penalty/ bonus.

Task-related costs are thus explicitly modeled as a function of task completion or duration. This is unlike the existing commercial solutions, which either model costs as resource-dependent or simulate them as random variables correlated with tasks. In the inventive system, the function parameters (such as bonus rates) specify the contract in terms of liquidated damages.

3. Representation of discrete-type risk factors (e.g., quality) by a synthetical task (the duration of which typically does not influence project completion time

The project modeled can contain a number of discrete risk factors, whose occurrence implies certain penalties. For example, an unexpected transformer failure leads to a penalty of 50 kUSD. The quality risks are represented in the model as tasks with zero completion, so they don't impact the overall project duration. Their probability distribution is well defined (e.g., a uniform distribution on the interval 0-1), and a penalty function maps this distribution to the specified penalty with given probability. For example, a penalty function with penalty 50 kUSD between 0 and 0.1 and penalty 0 between 0.1 and 1 combined with the mentioned uniform distribution would model a 10% chance of 50 kUSD penalty. (Of course, the risk factor can be given more than two possible stages, for instance: no failure/ between 1 and $n$ failures/ more than $n$ failures.) This solution has the advantage that the same mechanism can be used for duration-dependent penalties/ bonuses and discrete risk factors.

4. Specification of task dependence structure

A project is represented by a collection of interdependent tasks, for each of which a duration probability distribution and possibly a specified penalty is introduced.

The task dependence structure is originally modeled using the underlying scheduling system (e.g., Microsoft Project).

A successor task can depend on its predecessor in four ways:

- successor cannot start until the predecessor starts

- successor cannot start until the predecessor finishes

- successor cannot finish until the predecessor starts

- successor cannot finish until the predecessor finishes

For the purpose of computing project duration, these conditions are converted to mathematical functions specifying how the successor task's start and finish times can be computed based on the start and finish times of the predecessors.

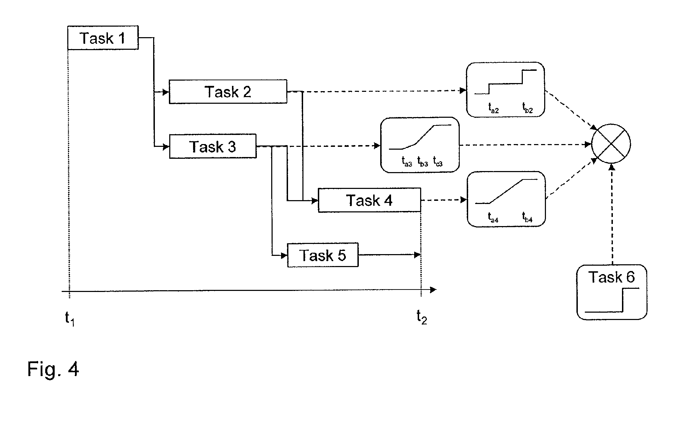

As an illustration, consider the example represented in Fig. 4 with five tasks and one quality risk factor. In this case, the project starts with task 1. Tasks 2 and 3 start as soon as task 1 is ended. Task 4 can be started only after both tasks 2 *and* 3 are finished, whereas task 5 can start as soon as task 2 or task 3 is finished. Finally, the project is completed after all tasks are finished.

In order to formulate the task dependencies mathematically, the following notation is introduced

$s_k \hat{=}$ start date of task $k$

$d_k \hat{=}$ duration of task $k$

$t_k \hat{=}$ finish date of task $k$.

The fact that task 4 cannot start until tasks 2 and 3 finish is represented mathematically as follows: the start day of task 4 is set equal to the maximum of the finish day of task 2 and finish day of task 3. The finish day of task 4 is described as the start day of task 4 plus the duration of task 4, as the finish does not depend on the other tasks.

The predecessor (task *i*)/ successor (task *k*) dependencies listed above are expressed by

i. $s_k = \max(s_i, r)$

ii. $s_k = \max(t_i, r)$

iii. $t_k = \max(s_k + d_k, s_i, r)$

iv. $t_k = \max(s_k + d_k, t_i, r)$,

where *r* corresponds to the remaining conditions, e.g.,

$$r = \min(t_i, t_j)$$

means 'as soon as task *i* or task *j* is finished'.

In the example of Fig. 4 (with $t = 0$ as project start date)

$$s_1 = 0 \qquad t_1 = s_1 + d_1 = d_1$$

$$s_2 = t_1 \qquad t_2 = s_2 + d_2$$

$$s_3 = t_1 \qquad t_3 = s_3 + d_3$$

$$s_4 = \max(t_2, t_3) \qquad t_4 = s_4 + d_4$$

$$s_5 = \min(t_2, t_3) \qquad t_5 = s_5 + d_5$$

$$s_6 = 0 \qquad t_6 = 0 \qquad \text{(quality risk factor)}$$

$$t = \max(t_1, t_2, t_3, t_4, t_{5,} t_6) \qquad \text{(total project duration).}$$

Task 6 is introduced artificially to represent a quality risk factor, as explained above.

Since $t_6$ is set to zero, task 6 does not influence the project completion time *t*, although it does so for the project cost *y*.

Liquidated damages are calculated as described above.

For task *k*, let $f_k(\cdot; \theta_k)$ be the penalty/bonus function parameterized by $\theta_k$, and $y_k$ be the corresponding liquidated damage. In the case of a completion-related penalty,

$$y_k = f_k(t_k; \theta_k)$$

whereas in the case of a duration-related (or quality-related) penalty,

$$y_k = f_k(d_k; \theta_k).$$

Of course, if no penalty/ bonus is attached to task *k*, then

$$f_k(\cdot;\theta_k) \equiv 0.$$

The overall liquidated damages are obtained by

$$y = \sum_k y_k \ .$$

In the example of Fig. 4, if task 2 is completed before a certain time $t_{a2}$, a pre-defined bonus is received; whereas if it is completed later than another given time $t_{b2}$, a penalty is charged. A similar clause applies to task 3 and 4, although bonus and penalty are proportional to delay (up to some cap).

Finally, the bonuses/ penalties are aggregated to determine the net liquidated damages.

5. Simulation of random variables

The disclosed system calculates a large number of scenarios by repeatedly sampling values from the probability distributions for the uncertain variables. This can be done using Monte Carlo simulation, which randomly generates values for uncertain variables over and over to simulate a given model.

For each scenario the resulting evolution of the project is simulated by drawing each task's duration $d_k$ from that task's probability distribution $p(d_k)$ or, more generally, from the joint distribution $p(d_1,d_2,...)$ if conditional dependencies *between durations* need to be introduced. The total project duration is evaluated using the task interdependence rules as explained above. Penalties are calculated for each task and summed up to give the overall project bonus/ penalty. Thus for each realization $i$ there are two results: total project duration

$$t^{(i)} = \max(t_1,t_2,t_3,t_4,t_5,t_6),$$

and total project penalty

$$y^{(i)} = \sum_k y_k \ .$$

These results from all different realizations $i=1,...,N$ are combined to produce two histograms: of project duration and of total liquidation damages.

6. Histogram smoothing by kernel estimation

Finally, in order to reduce the number of realizations required to reach a certain precision, the histograms are smoothed by using a kernel. The effect of statistical dispersion is indeed reduced by convoluting the histogram with a kernel function.

More specifically, considering a histogram with $m$ bins of width $\delta$.

Let $(t_j,n_j)$ be the histogram point which corresponds to the $j$-th bin.

In other words, there are $n_j$ (out of

$$N = \sum_{j=1}^{m} n_j \ )$$

realizations which have lead to a result in the interval

$$[t_j - \delta/2, \ t_j + \delta/2].$$

For the first bin, $j = 1$, the interval is

$$]-\infty, t_1 + \delta/2],$$

whereas for the last bin, $j = m$, it is

$$[t_m - \delta/2, \infty[.$$

The histogram is smoothed to obtain the final probability distribution as

$$\hat{p}_j = \sum_{k=-h/2}^{h/2} \psi_k n_{j+k},$$

where $\psi_k$ is a so-called kernel function, e.g., the Gaussian kernel

$$\psi_k = \begin{cases} C\exp(-k^2/2\sigma^2) & \text{for } k = -\frac{h}{2}, -\frac{h}{2}+1, \ldots, \frac{h}{2}-1, \frac{h}{2} \\ 0 & \text{otherwise} \end{cases}$$

In the above equation, $h$ is a positive even number, the kernel width is equal to $h\delta$, and the constant $C$ is such that

$$\sum_{j=1}^{m} \hat{p}_j \delta = 1.$$

For instance the normalized width is chosen equal to $h = 4$ and the standard deviation to $\sigma = 0.7$.

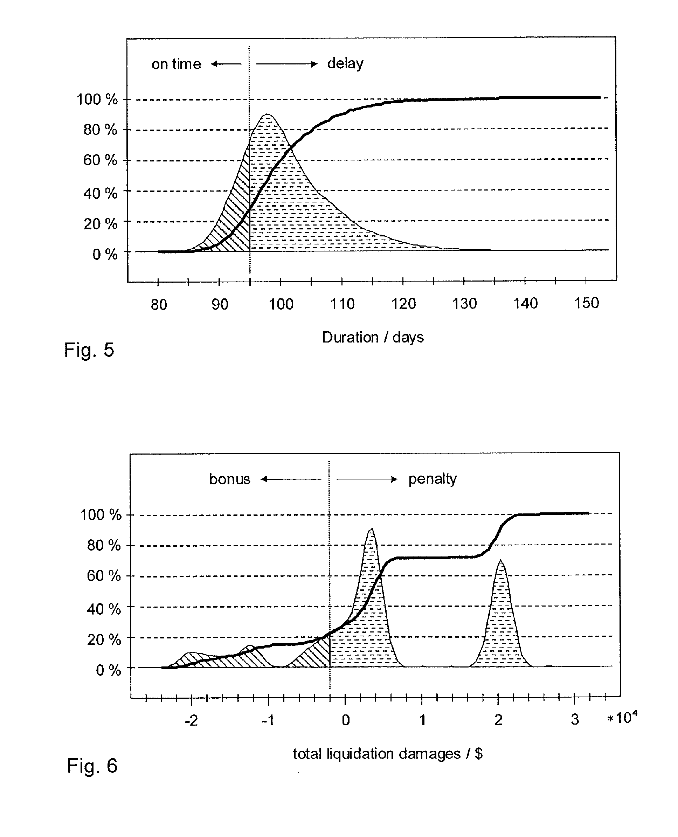

An exemplary set of smoothed histograms is shown in Figs. 5 and 6. The planned completion date is 95 days after project start and the planned bonus is 2000 $. To determine how realistic these figures are and how confident a project manager can be, the probability is cumulated into a risk profile.

There is risk because several parameters of the project plan (such as durations of certain activities) are a priori uncertain. The role of a risk profile is to capture and display the overall effect of uncertainties on duration and liquidation damages.

First, both Figures represent the planned duration and cost (vertical dashed line) as reference. The probability distribution of the completion date and the overall liquidation damages, which summarizes all the information known by the project manager, is represented by two sections.

The section to the left of the (vertical) dashed line corresponds to the chance of early completion, the section to the right of the dashed line the chance of delay. The probability distribution is asymmetrical in both Figures. The right tails are much longer than the left ones. Potential advance with respect to schedule remains modest, whereas delays can potentially be extremely long, leading to increased project duration and high penalties.

The risk profiles, which are defined by the cumulative probability distribution (climbing curve), are superposed.

Any probabilistic statement can be evaluated in principle: for instance, the chance that the project will be completed not later than the planned date is only 25%. Similarly, the chance of gaining some bonus is smaller than 20%.

The multi-modality of the cost profile can be interpretated as follows: Basically there are three different possible scenarios:

- with probability 20% (0-20%): a bonus is gained. Amount: between 0 and 24000 (average: 13000)

- with probability 52% (20-72%): limited penalty. Amount: not exceeding 8000

- with probability 28% (72-100%): large penalty. Amount: between approx. 16000 and 24000.

Furthermore, e.g., the 95% Value-at-risk, which may be used for determination of necessary contingencies, is 22000.

The inventive system can be used in a planning phase as well as in a tracking phase. In the second case, the past tasks are no more uncertain and are set to their actual realized value, thereby dynamically updating the risk profiles based on the latest information.

**Claims**

1.  Method for simulating duration and costs of a project in a data processing system, said project comprising a set of tasks;
    at least some of said project tasks being interdependent in such ways, that a successor task cannot be started or completed until at least one predecessor tasks is started or completed;
    at least some of said project tasks having uncertain duration within certain limits; and at least some of said project tasks carrying a bonus or a penalty depending on the task duration compared to a specified duration and/ or the task completion before or after a specified completion date;
    said method comprising the steps of:

    -   determining each task's duration probability distribution according to predefined parameters;

    -   performing a large number of different realizations of possible scenarios with stochastic task durations according to said probability distribution;

    -   for each of said realizations, determining

        -   total project duration depending on project task interdependencies and task duration and/ or completion time,
        -   a task bonus or penalty defined by an associated task penalty function depending on task interdependencies and task duration and/ or completion time for each of said project tasks, and
        -   total liquidation damages by aggregating said bonuses or penalties for said project tasks; and

    -   consolidating and displaying the results of all realizations.

2.  Method as in Claim 1, **characterized in, that** said task penalty functions are being expressed as linear functions or as piecewise linear functions.

3.  Method as in Claim 1 or 2, **characterized in, that** said interdependencies are being expressed as mathematical functions specifying how start and/ or completion times of successor tasks can be computed based on start and/ or completion times of a predecessor tasks.

4.  Method as in any of Claims 1 to 3, **characterized in, that** said consolidated results are displayed as histograms, one of total project duration and/ or one of total liquidation damages.

5.  Method as in Claim 4, **characterized in, that** said consolidated results are displayed as cumulative probability-risk profiles.

6.  Method as in any of Claims 1 to 4, **characterized in, that** during a project tracking phase durations and/ or completion dates of at least some of the project tasks are set to their actual realized value.

7.  A computer program loadable into an internal memory of a digital computer, comprising computer program code means to make, when said program is loaded in the computer, the computer execute the method of any of the preceding Claims.

Fig.1

Fig. 2

Fig. 3

Fig. 4

Fig. 5

Fig. 6

**European Patent Office**

**DECLARATION**

which under Rule 45 of the European Patent Convention shall be considered, for the purposes of subsequent proceedings, as the European search report

**Application Number**

EP 02 40 5301

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 1 July 2002 | Bowler, A |

EPO FORM 1504 (P04C37)